# EUROPEAN PATENT SPECIFICATION

(11) **EP 2 889 878 B1**
(45) Date of publication and mention of the grant of the patent: **03.01.2018**
(21) Application number: 14164279.3
(22) Date of filing: 10.04.2014
(51) Int. Cl.: G21C 7/06, G21C 7/103, G21C 7/04

(54) **Burnable absorber-integrated control rod guide thimble**
Steuerstangenführungshülse mit integriertem abbrennbaren Absorber
Tube de guidage de barre de commande à absorbeur intégré combustible

(30) Priority: 26.12.2013 KR 20130163426; 18.03.2014 KR 20140031399
(43) Date of publication of application: 01.07.2015
(73) Proprietor: Korea Advanced Institute Of Science And Technology, Daejeon 305-701 (KR); Kepco Engineering & Construction Company, Inc., Yongin-si, Gyeonggi-do 446-713 (KR)
(72) Inventor: Kim, Yong Hee, Daejeon 305-701 (KR); Yu, Hwan Yeal, Daejeon 305-701 (KR); Bin Yahya, Mohd Syukri, Daejeon 305-701 (KR); Lee, Kwang Won, Gyeonggi-do, 446-713 (KR); Sohn, Jong Joo, Gyeonggi-do, 446-713 (KR); Kim, Hyeong Heon, Gyeonggi-do, 446-713 (KR); Song, In Ho, Gyeonggi-do, 446-713 (KR); Bae, In Ho, Gyeonggi-do, 446-713 (KR)
(74) Representative: Herzog, Fiesser & Partner Patentanwälte PartG mbB

(56) References cited:
- EP-A1- 0 085 627
- EP-A1- 0 226 442
- EP-A1- 0 834 884
- JP-A- S6 263 891
- US-A- 4 576 787
- US-A- 5 272 735
- US-A1- 2008 050 270

## Description

### CROSS-REFERENCE TO RELATED APPLICATION

This application claims priority to and the benefit of Korean Patent Application No. 10-2013-0163426 filed in the Korean Intellectual Property Office on December 26, 2013.

### TECHNICAL FIELD

The present invention relates to a control rod guide thimble, and more particularly, to a burnable absorber-integrated control rod guide thimble that controls a power distribution and reactivity of a reactor core.

### BACKGROUND OF THE INVENTION

A nuclear reactor is a device that generates heat via fission chain reactions of nuclear fuels residing inside the reactor core. For a safe and economic operation of a nuclear reactor, an appropriate management of reactivity and power distribution of the reactor core is necessary. There are three common means of the reactivity and power distribution management in the state of the art commercial pressurized light water reactors. The first is by mixing the primary coolant uniformly with soluble boron, which is a neutron absorbent material. The second approach is by incorporating burnable absorbers in the fuel assembly lattices. The third mean in regulating the reactivity and density of neutrons involved in the fission chain reactions is by utilizing control rods that are made of neutron absorbent materials.

The management of reactor core reactivity with control rods is performed through either insertion or withdrawal of the neutron-absorbent rods from an upper end of the reactor core. Depth and speed of the said insertion or extraction dictate performance of the core reactivity management, whose impact is relatively quicker than the method of adjusting soluble boron concentration in the coolant. The control rods are, however, locally dispersed in the reactor core. When only control rods are used to regulate the core reactivity, local power peaking may arise around the core. As such, it may be difficult to simultaneously control power distribution and reactivity of the reactor core with control rods alone. In light of this control rod limitation, pressurized light water reactors mostly pursue the core reactivity management by controlling concentration of soluble boron in the coolant during normal operation. To smoothen control of power distribution and reduce dependency of the core reactivity management with borated water, various types of burnable absorbers are used extensively in the nuclear fuel assemblies.

Burnable absorber is, in general, a strong neutron absorber that is converted into a less neutron-absorbent nuclide after capturing a neutron. Selected examples of the burnable absorbers are gadolinium (Gd), erbium (Er), and Boron (B). In pressurized light water reactor, gadolinium (Gd) and erbium (Er) typically in Gd₂O₃ and Er₂O₃ compounds are appropriately mixed with UO₂ nuclear fuels. In general, erbium is not used as frequently as gadolinium since erbium depletes relatively slower, which results in a larger poisonous residual at the same fuel burnup. Erbium may, therefore, be employed rather effectively as a burnable absorber in a reactor core having a very long cycle. On the other hand, gadolinium has a relatively smaller poisonous residual and is, thus, used more frequently as a burnable absorber. Mixing gadolinium with nuclear fuel, however, decreases the fuel heat conductivity which may result in a very low power density. As such, the amount of gadolinium mixed to the nuclear fuel may be quite limited. In addition, gadolinium is burnt very quickly in the Gd₂O₃ admixed nuclear fuels, making gadolinium difficult to be used in a reactor core having a long cycle.

Boron is, on the other hand, mostly used in the form of a so-called IFBA (Integrated Fuel Burnable Absorber) rod, which is essentially a UO₂ fuel rod coated with a very thin layer of ZrB₂. Boron may also be loaded into the control rod guide thimble in the form of a solid boron compound such as B₄C, in a specific shape such as in the form of a WABA (Wet Annular Burnable Absorber) rod. When boron absorbs a neutron, helium gas is produced, making it difficult for boron to be directly mixed with the nuclear fuel. This is one of the reasons why boron is used in the form of an IFBA rod or is loaded in the guide thimble in the form of a WABA rod instead. Boron has a relatively small neutron absorption cross-sectional area. As such, when boron is used in the form of an IFBA rod, it needs to be integrated into a large number of fuel rods. On the other hand, when boron is loaded to the control rod guide thimble in the form of a WABA rod, the insertion of control rod in the said guide thimble may be denied. This unfavorable limitation restricts the use of boron as a burnable absorber in the form of the WABA rod. Accordingly, use of other variants of burnable absorbers are similarly and considerably restricted.

In the core reactivity management by the control of soluble boron concentration in the cooling water, the boron is uniformly mixed with the coolant. It is, therefore, possible to control the core reactivity while simultaneously minimizing distortion on the core power distribution. It however takes some time to uniformly inject and dilute the soluble boron into and with the coolant, when it is necessary to quickly control reactivity of the reactor core. As such, the core reactivity may not properly be controlled using boric acid. Furthermore, a large amount of liquid waste may be generated during dilution of the soluble boron concentration. In addition, an expensive and complicated device called 'chemical and volume control system (CVCS)' is needed in order to regulate the concentration and water chemistry of soluble boron in the primary coolant system. Besides, the borated water is acidic, which accelerates corrosion of structural material constituting the primary coolant system and ultimately reduces operational performance of the nuclear reactor. Moreover, when concentration of soluble boron in the coolant is very high, the resulting coolant temperature coefficient may approach zero (0) or even become positive, which is not preferable for safety. This positive coolant temperature coefficient concern is an urgent issue related to the safety of a pressurized water reactor.

The abovementioned problems substantiate the needs to actively use more burnable absorbers in order to reduce dependency of reactor core reactivity management using soluble boron. A feasibility study on a soluble boron-free pressurized water reactor has been conducted. Should concentration of soluble boron in the coolant be largely decreased or even be completely removed, various problems related to the reactor operation with soluble boron is considerably alleviated or removed. This enables a safer and more economical operation of a nuclear reactor. However, in order to successively control power distribution and reactivity of the reactor core, while at the same time reducing the amount of soluble boron diluted in the coolant, use of burnable absorbers needs to be substantially increased. As such, a technology for remedying the above-described disadvantages of the burnable absorbers is needed.

Accordingly, the applicant of the present invention has considered a new burnable absorber that is capable of controlling power distribution and reactivity of the reactor core more effectively.

U.S. Patent Publication No. 2010-0040189 discloses a nuclear fuel cladding comprising a layer of burnable neutron poison.

Patent Document JP 62-63891 discloses a control rod guide thimble comprising burnable neutron poison.

### SUMMARY OF THE INVENTION

In light of the various aforementioned problems related to the soluble boron dilution and the existing burnable absorbers, the present invention has been conceptualized in an effort to provide a burnable absorber-integrated control rod guide thimble, which when being used is capable to effectively control the power distribution and the reactivity of the core of a nuclear reactor.

The burnable absorber-integrated control rod guide thimble is designed as such it can be loaded or removed or replaced per operational specifications. A burnable absorber-integrated control rod guide thimble according to the invention is defined in claim 1. Preferred embodiments are defined in the dependent claims. The burnable absorbers may be inserted or integrated at the extended edges of the control rod guide thimble. These burnable absorbers at the extended edges of the control rod guide thimble may be replaced during refueling interval of the reactor core when necessary.

Furthermore, neutron-absorbent materials may also be directly admixed to the control rod guide thimble. As such, the control rod guide thimble may be made of an alloy of the burnable absorber and the material of the control rod guide thimble. The burnable absorber may be loaded in such a manner that the burnable absorber in the form of powders may be dispersed into the control rod guide thimble. In this case, if necessary, the control rod guide thimble itself may be replaced during refueling interval in order to reload fresh neutron-absorbent materials into the fuel assembly.

The burnable absorber may be made of any one of the neutron-absorbent materials used in the existing burnable absorber technologies, such as boron, gadolinium, erbium, cadmium (Cd), samarium (Sm) and europium (Eu). The burnable absorber may have an appropriate chemical composition compound. For example, boron, metallic gadolinium and erbium, a carbide such as B₄C or an oxide such as Gd₂O₃, and Er₂O₃ may be used when necessary. The burnable absorber may also be made of a combination of boron, gadolinium, erbium, cadmium, samarium and others as appropriately.

According to exemplary embodiments of the present invention, a more effective control of the power distribution and the reactivity of a nuclear reactor is uniquely possible with the burnable absorber-integrated control rod guide thimble.

Since the burnable absorber-integrated control rod guide thimble according to the present invention is independently manufactured by being completely separated from the nuclear fuel, its manufacturing process is simple and its manufacturing cost is low. Furthermore, the invention enables the possibility of maximizing the loading amount of the nuclear fuel in fuel rod region without adversely affecting performance of the nuclear fuel.

The invention may offer the possibility of effectively controlling power distribution and reactivity of a soluble boron-free nuclear reactor.

### BRIEF DESCRIPTION OF THE DRAWINGS

FIGS. 1A and 1B illustrate nuclear fuel assemblies according to the related art.
FIGS. 2A and 2B are enlarged views of portions A and B illustrated in FIGS. 1A and 1B.
FIGS. 3A and 3B illustrate nuclear fuel assemblies provided with a burnable absorber-integrated control rod guide thimble according to an exemplary embodiment of the present invention.
FIG. 4 illustrates the burnable absorber-integrated control rod guide thimble according to the exemplary embodiment of the present invention.
FIG. 5 illustrates a burnable absorber-integrated control rod guide thimble according to another exemplary embodiment of the present invention.
FIG. 6 illustrates a burnable absorber-integrated control rod guide thimble according to still another exemplary embodiment of the present invention.
FIG. 7 illustrates a burnable absorber-integrated control rod guide thimble which is not part of the present invention.
FIG. 8 illustrates an example of a change in reactivity against burnup of a nuclear fuel assembly using the burnable absorber-integrated control rod guide thimble according to an exemplary embodiment of the present invention.

### DETAILED DESCRIPTION OF THE EMBODIMENTS

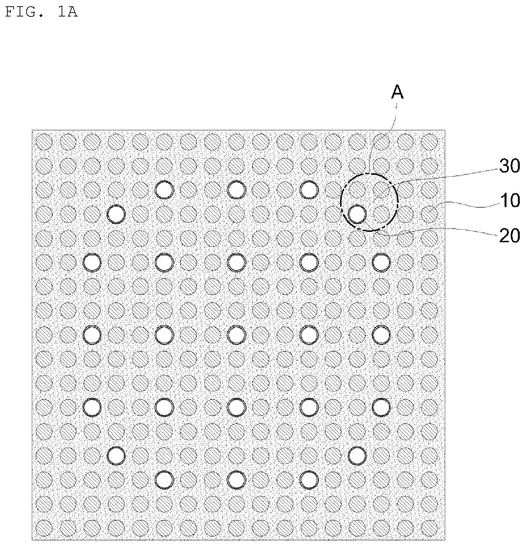

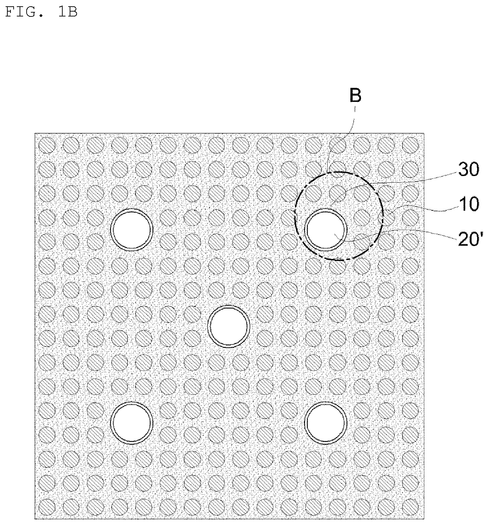

Hereinafter, a burnable absorber-integrated control rod guide thimble according to an exemplary embodiment of the present invention will be described with reference to the drawings. A burnable absorber that is newly developed according to the present invention is referred to as a BigT (Burnable absorber-Intergrated Guide Thimble). Further, the accompanying drawings illustrate merely some of various exemplary embodiments of the present invention, and are illustrated larger than it actually is to easily describe exemplary embodiments of the present invention, but technical features of the present invention are not limited thereto. The scope of the invention is defined in the appended claims. A nuclear fuel assembly of a pressurized water reactor may be largely divided into two types depending on a design of a control rod guide thimble, and concepts of two types of typical nuclear fuel assemblies are illustrated in FIGS. 1A and 1B, respectively. FIGS. 1A and 1B illustrate nuclear fuel assemblies including a plurality of nuclear fuel rods 10 and typical control rod guide thimbles 20 and 20' according to the related art that is provided between the nuclear fuel rods 10 so as to guide an up-and-down motion of a control rod provided to control reactivity of a reactor core. In the nuclear fuel assembly illustrated in FIG. 1A, a plurality of control rod guide thimbles 20 slightly larger than the nuclear fuel rods 10 is used. In the nuclear fuel assembly illustrated in FIG. 1B, a few control rod guide thimbles 20' even larger than the nuclear fuel rods 10 are used. In these drawings, cooling water 30 flows in a space between the plurality of nuclear fuel rods 10 and the control rod guide thimble 20 or 20'. In the typical nuclear fuel assemblies according to the related art, in order to control the reactivity of the reactor core and power distributions within the nuclear fuel assemblies, a method in which a typical burnable absorber is loaded into a nuclear fuel region and the control rod guide thimble 20 or 20' as described in the related art is adopted. Further, as stated above, a concentration of boron contained in the cooling water 30 is slowly adjusted during an operation of a nuclear reactor.

However, as described in the "BACKGROUND OF THE INVENTION," various burnable absorbers that are currently used may adversely affect performance of nuclear fuel, or may disturb insertion of the control rod. Particularly, in order to alleviate several problems caused by the mixing of soluble boron with the coolant, there is a growing need to use more burnable absorbers, but it may be difficult to effectively increase the amount of burnable absorbers due to the aforementioned problems. Furthermore, in order to develop a future reactor core of a pressurized water reactor from which boric acid solution is completely removed, there is a need for a high-performance burnable absorber capable of being attached or detached without affecting the driving of the control rods.

The applicant of the present invention has solved the aforementioned problems by simply changing the configurations of the control rod guide thimbles 20 and 20', and more particularly, can achieve the aforementioned technical object by additionally providing a burnable absorber at the control rod guide thimbles 20 and 20' provided so as to guide the control rods. In order to achieve the technical object, it is necessary to form a space where the burnable absorber is additionally provided at the control rod guide thimbles 20 and 20', and in order to form the space, it is necessary to change shapes of the control rod guide thimbles 20 and 20' to become larger or thicker. However, as illustrated in FIGS. 1A and 1B, since the cooling water 30 flows in the space formed between the control rod guide thimble 20 or 20' and the plurality of nuclear fuel rods 10 provided near the control rod guide thimble, it can be seen that the changing of the shape of the control rod guide thimble 20 or 20' to become larger is directly associated with the space in which the cooling water 30 flows. Furthermore, in order to provide the burnable absorber, when inner diameters of the control rod guide thimbles 20 and 20' are decreased by increasing thicknesses of the guide thimble, a design of the control rod may be considerably changed.

The applicant of the present invention has invented a control rod guide thimble whose design has been changed as follows in order to load the burnable absorber to the control rod guide thimble while minimizing influence on a design of the typical nuclear fuel assembly and control rod.

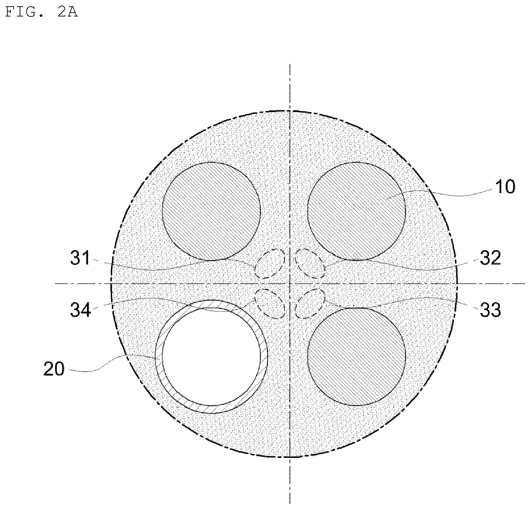

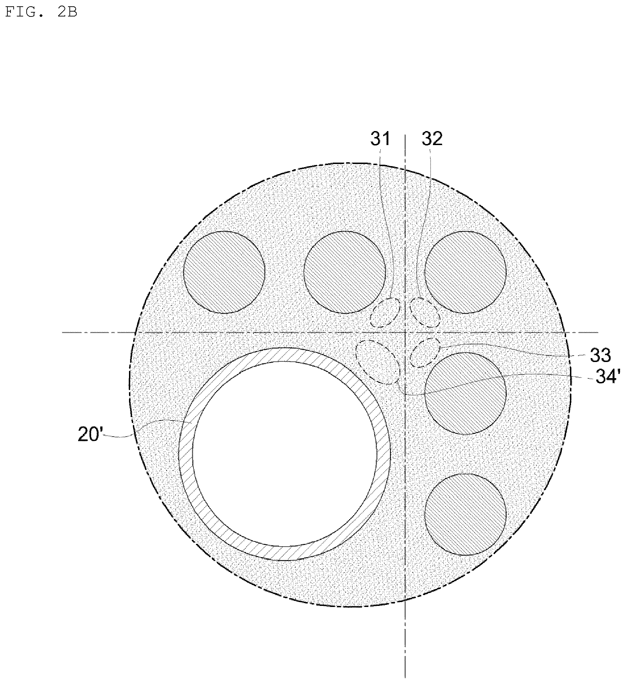

As illustrated in FIGS. 2A and 2B, the applicant of the present invention has confirmed that when the space formed between the control rod guide thimble 20 or 20' and the plurality of nuclear fuel rods 10 provided near the control rod guide thimble to allow the cooling water 30 to flow are divided into four up, down, left, and right regions, the cooling water 30 in first to third regions 31, 32 and 33 adjacent to the nuclear fuel rod 10 directly affects the nuclear fuel rod 10, whereas the cooling 30 flowing along a fourth region 34 or 34' adjacent to the control rod guide thimble 20 or 20' does not affect the nuclear fuel rod 10. Accordingly, the applicant of the present invention has confirmed that it is possible to form a space where the burnable absorber is additionally provided at the control rode guide thimble 20 or 20' by enlarging the shape of the control rod guide thimble 20 or 20' so as to include a part of the fourth region 34 or 34'.

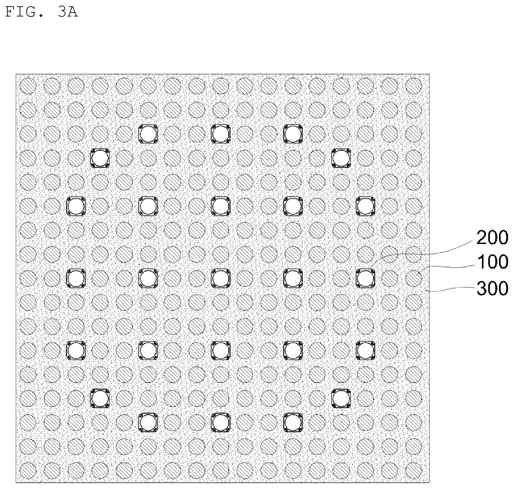

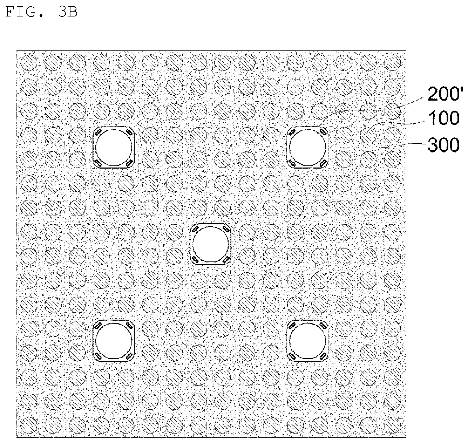

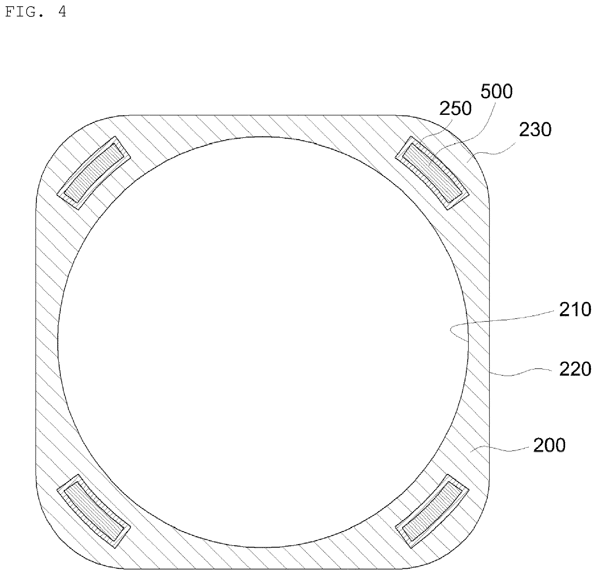

FIGS. 3A and 3B illustrate nuclear fuel assemblies provided with a burnable absorber-integrated control rod guide thimble according to an exemplary embodiment of the present invention, and FIG. 4 illustrates the burnable absorber-integrated control rod guide thimble. The present invention will be described in more detail with reference to the drawings. As illustrated in the drawings, the present invention has a technical feature in that burnable absorbers 500 are additionally provided within a control rod guide thimble 200 or 200'. Since the control rod guide thimble 200 or 200' has a function for guiding the typical control rod, an inner surface 210 may have a circular shape for guiding the typical control rod, and an outer surface 220 may be formed by extending to the outside so as to provide the burnable absorber 500 within the control rod guide thimble 200 or 200'. More particularly, burnable-absorber inserting spaces 250 into which the burnable absorbers 500 are inserted are formed in four edges 230 of the control rod guide thimble 200 or 200', and the burnable absorbers 500 are respectively inserted into the burnable-absorber inserting spaces 250. According to the invention, and as illustrated in FIGS. 2A and 2B, the space formed between the control rod guide thimble 200 or 200' and the nuclear fuel rods 100 provided near the control rod guide thimble to allow the cooling water 300 to flow is divided into the four up, down, left, and right regions to be sorted into the first to third regions adjacent to the nuclear fuel rod 100 and the fourth region adjacent to the control rod guide thimble 200, and the four edges 230 are extended up to the fourth region. That is, according to the present invention, a surplus space that does not serve to remove heat generated in the nuclear fuel rods 100 is actively utilized while maintaining functions of the nuclear fuel rods 100 constituting the typical nuclear fuel assembly, the cooling water 300 and the control rod, so that the burnable absorbers can be additionally inserted within the reactor core.

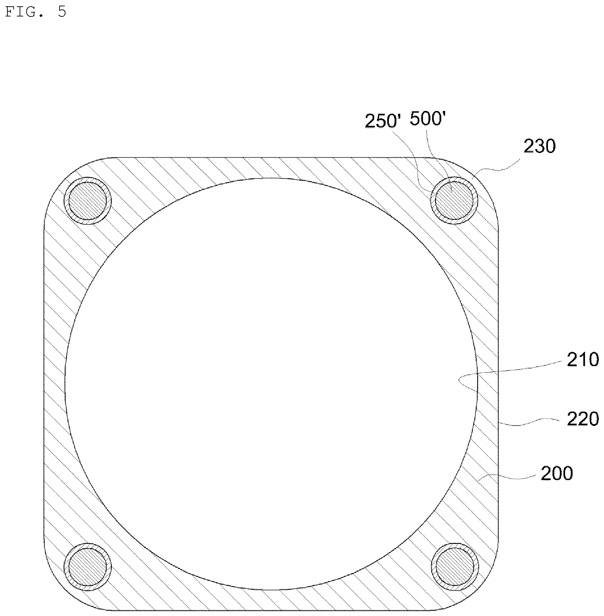

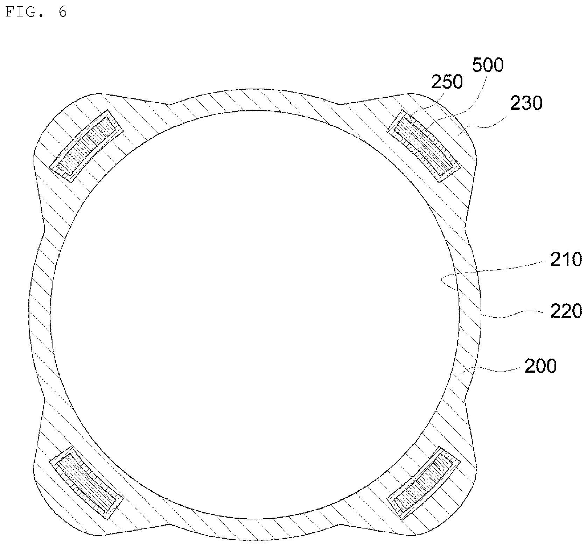

Meanwhile, the burnable absorbers 500 each having a pad shape may be provided at the four edges 230 of the control rod guide thimble 200 illustrated in FIG. 4. However, a shape and size of the burnable absorber 500 are not limited to a specific shape, and may be provided to have various shapes and appropriate sizes to be required. As one example, FIG. 5 illustrates a control rod guide thimble 200 according to another exemplary embodiment of the present invention. As illustrated in the drawing, burnable absorbers 500' each having a rod shape may be provided within burnable absorber inserting spaces 250' that are respectively formed in four edges 230. That is, in the control rod guide thimbles 200 and 200' integrated with the burnable absorbers 500 and 500' according to the exemplary embodiments of the present invention, the burnable absorbers 500 and 500' required to effectively control the power distributions and the reactivity of the reactor core may be additionally provided in additional spaces formed at the four edges 230 obtained by changing the shapes of the control rod guide thimbles. On the other hand, although it has been described that the control rod guide thimbles 200 and 200' according to the exemplary embodiments of the present invention each have a rectangular outer surface 220, the technical feature of the present invention is not limited thereto. As illustrated in FIG. 6, it is possible to form only the four edges 230 to extend. That is, it is possible to appropriately form portions other than the four edges 230 to have an appropriate shape so as not to disturb flow of the cooling water. The exemplary embodiments described above are provided to describe a case where the burnable absorber is loaded into the control road guide thimble, but the technical feature of the present invention is not limited thereto.

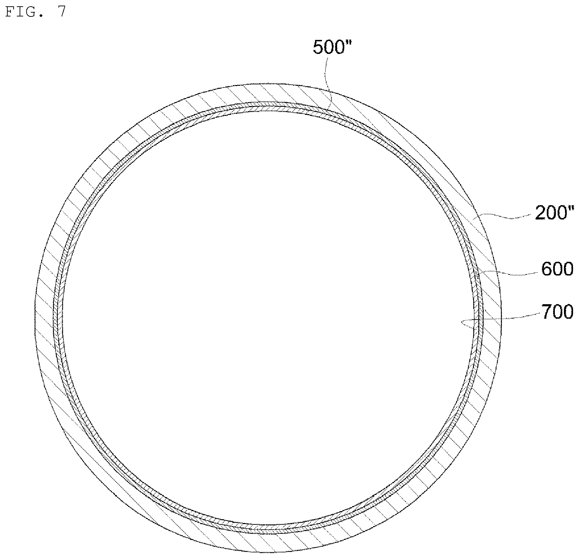

FIG. 7 illustrates a case which is not part of the present invention, wherein a burnable absorber 500" is loaded onto an inner surface of a control rod guide thimble 200", as a separate burnable absorber layer 600. Unlike the typical burnable absorber loaded while mostly occupying the inside of the control rod guide thimble 200", in the present exemplary embodiment, a very thin burnable absorber layer 600 is loaded along an inner surface of the control road 200" such that the burnable absorber 500" can be loaded into the control load guide thimble 200" and the control rod can be driven, and a metal protective layer 700 is formed outside the burnable absorber layer 600 so as to protect the burnable absorber layer 600 during the movement of the control rod. In FIG. 7, the burnable absorber layer 600 may be made of only the burnable absorber 500", or may be made of a material including the burnable absorber 500". It is possible to load the burnable absorber 500" onto the inner surface of the control rod guide thimble 200" while the control rod can be inserted and withdrawn by loading the burnable absorber 500" in the form of a thin layer onto the inner surface of the control rod guide thimble 200". In general worth of burnable absorbers strongly depends on its self-shielding effect which is largely affected by the shape of burnable absorber. Thus, the homogeneous ring-shape burnable absorber 500" loading in FIG. 7 can be changed to a heterogeneous irregular shape in order to adjust the self-shielding effect in an optimal way. For example, an azimuthally heterogeneous loading of burnable absorber may provide a more favorable reactivity change than the simple homogeneous ring-shape one.

As illustrated in FIG. 7, even though the burnable absorber 500" in the form of a layer is loaded onto the inner surface of the control rod guide thimble 200", the diameter of the control rod needs to be slightly decreased in order to smoothly drive the control rod, but it is not necessary to largely change the typical design. As mentioned above, in order to load or detach the burnable absorber 500" onto or from the inner surface of the control rod guide thimble 200", a narrow space may be needed to be formed between the burnable absorber layer 600 of FIG. 7 and the inner surface of the control rod guide thimble 200". However, when the burnable absorber 500" is a fixed type that is not replaced, it is not necessary to form an additional space between the inner surface of the control rod guide thimble 200" and the burnable absorber layer 600, and the inner surface of the control rod guide thimble and the burnable absorber layer may physically come in contact with each other. If necessary, the burnable absorber 500" in the form of a layer may be provided on an outer surface of the control rod guide thimble 200". As illustrated in FIG. 7, when the burnable absorber 500" in the form of a thin layer is attached onto the inner surface of the control rod guide thimble 200", in terms of influence on the control rod worth, there is no great difference between the present example and the embodiments of the present invention described above. This is because the burnable absorber layer 600 is very thinly formed.

As mentioned above, the reactor core provided with the control rod guide thimble 200, 200' or 200" integrated with the burnable absorber 500, 500' or 500" adopts a method in which the additional burnable absorbers are loaded without affecting the performance of the nuclear fuel, so that it is possible to more effectively control the power distribution and the reactivity of the reactor core. Particularly, the burnable absorbers 500, 500' or 500" can be loaded or removed from the control rod guide thimble 200, 200' or 200''. A previously burned burnable absorber may be naturally replaced by a fresh burnable absorber 500 even in the case of Fig. 6. In this case, it is possible to optimally use the burnable absorbers 500 or 500' by loading new burnable absorbers 500 or 500' instead of the previously used burnable absorbers 500 or 500' as the BigT to the previously burned nuclear fuel assembly.

As one example of the present invention, the burnable absorbers 500 or 500' may be replaced by fresh burnable absorber whenever the nuclear fuel of the reactor core is reloaded. Accordingly, the reactor core provided with the control rod guide thimble 200 or 200' integrated with the burnable absorbers 500 or 500' according to the present invention can control the reactivity of the reactor core through the burnable absorbers 500 or 500' provided within the control rod guide thimble 200 in addition to the controlling of the reactivity of the reactor core by the existing burnable absorbers and the cooling water 300 with which boric acid is mixed, it is possible to more easily control the power distribution and the reactivity of the nuclear reactor in comparison to the related art.

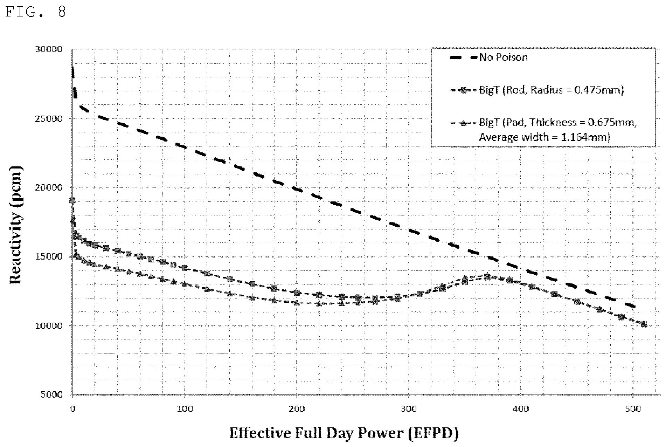

FIG. 8 illustrates a result obtained by applying the burnable absorber-integrated control rod guide thimble according to the exemplary embodiment of the present invention to the nuclear fuel assembly provided with the plurality of control rod guide thimbles 200 illustrated in the FIG. 3A. In the present numerical analysis, a characteristic of the reactor core of the typical pressurized water reactor is considered, and it is assumed that a cycle of the reactor core is 510 days. FIG. 8 represents results for two types of gadolinium burnable absorbers as the BigT. In the drawing, 'Pad' represents a case where gadolinium burnable absorbers each having the pad shape described in FIG. 4 are used, and the other represents a case where gadolinium metal burnable absorbers each having the rod shape described in FIG. 5 are used. In the numerical analysis, a radius of the gadolinium burnable absorber having the rod shape is 0.48 mm, and a thickness and a width of the gadolinium burnable absorber having the pad shape are 0.68 mm and 1.17 mm, respectively.

As illustrated in FIG. 8, it can be seen that a very small amount of gadolinium burnable absorbers as the BigT is used to initially suppress a large surplus reactivity of about 10,000 pcm, and after 510 days, a remaining poisonous action of the gadolinium is a relatively small value of 1,000 pcm or less. From the results of FIG. 8, it can be seen that when the gadolinium burnable absorber as the BigT is used, a characteristic of a change in the reactivity varies depending on the shape of the burnable absorber. This is because a so-called self-shielding degree varies depending on the shape of the burnable absorber even when the same burnable absorber is used. Accordingly, it is possible to improve a reactivity control characteristic by optimizing the shape of the burnable absorber as the BigT according to the present invention.

Since the burnable absorber as the BigT suggested in the present invention is directly attached to the control rod guide thimble, a reactivity worth of the control rod may be largely decreased. A reactivity worth of the control rod using a typical B₄C neutron absorber in the nuclear fuel assembly model used in the result of FIG. 8 is represented in Table 1. In addition, a change of the power peaking factor with the burning of the nuclear fuel in the nuclear fuel assembly used in FIG. 8 is also represented in Table 1.

**[Table 1]**

| Type of burnable absorber as BigT | Control rod worth (pcm) (B₄C, all power conditions) | Power peaking factor | | |
|---|---|---|---|---|
| | | 0 efpd* | 255 efpds* | 510 efpds* |
| Rod (radius = 0.475 mm) | 42,197 | 1.07 | 1.04 | 1.05 |
| Pad | 40,908 | 1.08 | 1.04 | 1.05 |

| | | | | |
|---|---|---|---|---|
| * effective full power day | | | | |

As can be seen from Table 1, since control rod worth in both of the burnable absorber having the rod shape and the burnable absorber having the pad shape as the BigT according to the present invention are far more than 40,000 pcm, it is possible to achieve a very high control rod worth even when the burnable absorber as the BigT is used. The reason why the very high control rod worth can be achieved even though the strong burnable absorber 500 or 500' is directly loaded to the control rod guide thimble 200 or 200' is because the burnable absorber 500 or 500' is loaded to only a position near a vertex of the modified control rod guide thimble 200 or 200'.

Meanwhile, as represented in Table 1, a power peaking factor within the nuclear fuel assembly when the strong burnable absorber as the BigT according to the present invention is fueled is about 1.08 under the maximum condition at an initial cycle. The power peaking factor is gradually decreased as the nuclear fuel is burned, and is decreased to about 1.05 after 510 days. Such a magnitude of power peaking factor approximates to a power peaking factor of the actual reactor core design. The nuclear fuel assembly used for the power peaking factor of Table 1 has a constant uranium enrichment of 4.5% in all of the fuel rods 100. In the actual nuclear fuel assembly, in order to reduce the power peaking factor, a slightly low uranium enrichment may be used in a partial region. Accordingly, even when the burnable absorber as the BigT according to the present invention is used, if a slightly low enrichment is applied in a generation region of the peak power, the power peaking factor can further be reduced.

On the other hand, the burnable absorbers 500 or 500' used in the exemplary embodiments of the present invention are materials that have very large neutron absorption cross-sectional areas and that are converted into materials having small neutron absorption cross-sectional areas after capturing a neutron. The burnable absorbers 500 or 500' inserted in the nuclear reactor absorb neutrons during the operation of the nuclear reactor, so that it is possible to adjust the reactivity of the nuclear reactor. The burnable absorbers 500 or 500' used in the exemplary embodiments of the present invention may be made of any one of materials which can be used as existing burnable absorbers, such as boron, gadolinium, erbium, cadmium, samarium, and europium. Further, the burnable absorber may be appropriately used by mixing boron, gadolinium, erbium, cadmium, samarium, and europium in an appropriate chemical composition.

As still another exemplary embodiment of the present invention, the burnable absorber may be dispersed and loaded within the extended control rod guide thimble 200 or 200', or may be made of an alloy of a metallic material such as gadolinium or erbium and a material of the control rod guide thimble 200 or 200'. In addition, the burnable absorber as the BigT suggested in the present invention has a general configuration in an axial direction. That is, the burnable absorber in the axial direction may cover the entire activation region where the nuclear fuel is presented, or a region where the burnable absorbers are not loaded may be considered as partial upper and lower portions thereof.

Although the exemplary embodiments of the present invention have been described, it is to be appreciated that those skilled in the art can variously modify and change the embodiments within the scope of the present invention, which is defined in the appended claims.

## Claims

1. A burnable absorber-integrated control rod guide thimble with a fuel assembly of square grid arrangement comprising nuclear fuel rods (100) and a control rod guide thimble (200, 200') that is adapted to guide an up-and-down motion of a control rod provided to control reactivity of a reactor core, wherein an inner surface (210) of the control rod guide thimble (200, 200') has a circular shape so as to guide the control rod, and an outer surface (220) thereof has four edges (230), each of said edges (230) providing a first space (250, 250') in which a burnable absorber (500, 500') is included, wherein a second space, formed between the control rod guide thimble (200, 200') and the neighboring three nuclear fuel rods (100) to allow cooling water (300) to pass, is divided into four regions (31, 32, 33, 34), comprising regions (31, 32, 33) adjacent to each of the three nuclear fuel rods (100) and a fourth region (34) adjacent to the control rod guide thimble (200, 200'), and each of the four edges (230) of the control rod guide thimble (200, 200') is extended to the fourth region (34).

2. The burnable absorber-integrated control rod guide thimble of claim 1, wherein the burnable absorber (500, 500') is loaded so as to be fixed to the control rod guide thimble (200, 200'), or is detachably attached so as to be loaded or detached.

3. The burnable absorber-integrated control rod guide thimble of claim 1, wherein the burnable absorber (500, 500') is made of any one of boron (B), gadolinium (Gd), erbium (Er), cadmium (Cd), samarium (Sm) and europium (Eu), or a combination thereof.

4. The burnable absorber-integrated control rod guide thimble of claim 1, wherein the guide thimble (200, 200') is made of an alloy of a neutron-absorbent material and a material of the control rod guide thimble (200, 200').

5. The burnable absorber-integrated control rod guide thimble of claim 1 wherein the burnable absorber (500, 500') is dispersed in the control rod guide thimble (200, 200') in the form of fine powders.

## Patentansprüche

1. Steuerstabführungshülse mit integriertem abbrennbarem Absorber mit einer Brennstoffgruppierung mit Quadratgitteranordnung, die Kernbrennstäbe (100) umfasst, und einer Steuerstabführungshülse (200, 200'), die zum Führen einer auf- und absteigenden Bewegung eines Steuerstabs eingerichtet ist, der bereitgestellt wird, um die Reaktivität eines Reaktorkerns zu steuern,
wobei eine Innenfläche (210) der Steuerstabführungshülse (200, 200') eine Kreisform hat, um so den Steuerstab zu führen, und eine Außenfläche (220) davon vier Kanten (230) aufweist, wobei jede der Kanten (230) einen ersten Raum (250, 250') bereitstellt, in den ein abbrennbarer Absorber (500, 500') eingeschlossen ist,
wobei ein zweiter Raum, der zwischen der Steuerstabführungshülse (200, 200') und den benachbarten drei Kernbrennstoffstäben (100) gebildet ist, um das Hindurchgelangen von Kühlwasser (300) zu ermöglichen, in vier Regionen (31, 32, 33, 34) unterteilt ist, die Regionen (31, 32, 33) neben jedem der drei Kernbrennstäbe (100) und eine vierte Region (34) neben der Steuerstabführungshülse (200, 200') umfassen, und wobei sich jede der vier Kanten (230) der Steuerstabführungshülse (200, 200') in die vierte Region (34) erstreckt.

2. Steuerstabführungshülse mit integriertem abbrennbarem Absorber nach Anspruch 1, wobei der abbrennbare Absorber (500, 500') so geladen wird, dass er an der Steuerstabführungshülse (200, 200') zu befestigen ist, oder abnehmbar befestigt ist, so dass er geladen oder abgenommen werden kann.

3. Steuerstabführungshülse mit integriertem abbrennbarem Absorber nach Anspruch 1, wobei der abbrennbare Absorber (500, 500') aus einem beliebigen von Bor (B), Gadolinium (Gd), Erbium (Er), Cadmium (Cd), Samarium (Sm) und Europium (Eu) oder einer Kombination davon gefertigt ist.

4. Steuerstabführungshülse mit integriertem abbrennbarem Absorber nach Anspruch 1, wobei die Führungshülse (200, 200') aus einer Legierung eines Neutronen absorbierenden Materials und eines Materials der Steuerstabführungshülse (200, 200') gefertigt ist.

5. Steuerstabführungshülse mit integriertem abbrennbarem Absorber nach Anspruch 1, wobei der abbrennbare Absorber (500, 500') in der Steuerstabführungshülse (200, 200') in Form von feinen Pulvern dispergiert ist.

## Revendications

1. Tube-guide de barre de contrôle à poison consommable intégré avec un assemblage combustible de pas carré comprenant des crayons de combustible nucléaire (100) et un tube-guide de barre de contrôle (200, 200') qui est adapté pour guider un mouvement ascendant et descendant d'une barre de contrôle prévue pour contrôler la réactivité d'un coeur de réacteur,
dans lequel une surface intérieure (210) du tube-guide de barre de contrôle (200, 200') a une forme circulaire de manière à guider la barre de contrôle, et une surface extérieure (220) de celui-ci a quatre bords (230), chacun desdits bords (230) fournissant un premier espace (250, 250') dans lequel est contenu un poison consommable (500, 500'),
dans lequel un deuxième espace, formé entre le tube-guide de barre de contrôle (200, 200') et les trois crayons de combustible nucléaire voisins (100) pour laisser passer l'eau de refroidissement (300), est divisé en quatre régions (31, 32, 33, 34), comprenant des régions (31, 32, 33) contiguës à chacun des trois crayons de combustible nucléaire (100) et une quatrième région (34) contiguë au tube-guide de barre de contrôle (200, 200'), et chacun des quatre bords (230) du tube-guide de barre de contrôle (200, 200') est prolongé jusqu'à la quatrième région (34).

2. Tube-guide de barre de contrôle à poison consommable intégré de la revendication 1, dans lequel le poison consommable (500, 500') est chargé de manière à être fixé au tube-guide de barre de contrôle (200, 200') ou est attaché de façon détachable de manière à être chargé ou détaché.

3. Tube-guide de barre de contrôle à poison consommable intégré de la revendication 1, dans lequel le poison consommable (500, 500') est constitué de n'importe quel élément parmi le bore (B), le gadolinium (Gd), l'erbium (Er), le cadmium (Cd), le samarium (Sm) et l'europium (Eu), ou d'une combinaison de ceux-ci.

4. Tube-guide de barre de contrôle à poison consommable intégré de la revendication 1, dans lequel le tube-guide (200, 200') est constitué d'un alliage d'un matériau absorbant les neutrons et d'un matériau du tube-guide de barre de contrôle (200, 200').

5. Tube-guide de barre de contrôle à poison consommable intégré de la revendication 1, dans lequel le poison consommable (500, 500') est dispersé dans le tube-guide de barre de contrôle (200, 200') sous la forme de poudres fines.
